# EUROPEAN PATENT SPECIFICATION

(11) **EP 4 520 038 B1**
(45) Date of publication and mention of the grant of the patent: **23.09.2026**
(21) Application number: 23722895.2
(22) Date of filing: 02.05.2023
(51) Int. Cl.: H04N 5/222, H04N 5/272, H04N 5/262, H04N 5/265, H04N 23/61, H04N 23/611, H04N 23/695

(54) **THREE DIMENSIONAL VIRTUAL DIRECTOR**
DREIDIMENSIONALER VIRTUELLER DIREKTOR
DIRECTEUR VIRTUEL TRIDIMENSIONNEL

(30) Priority: 02.05.2022 LU 501985
(43) Date of publication of application: 12.03.2025
(60) Divisional application: 26199197.0
(73) Proprietor: Barco N.V., 8500 Kortrijk (BE)
(72) Inventor: SLOWACK, Jürgen, 8500 Kortrijk (BE)
(74) Representative: Sader, Marc
(86) International application number: PCT/EP2023/061581
(87) International publication number: WO 2023/213830

(56) References cited:
- WO-A1-2023/149836
- US-A1- 2006 251 382
- US-A1- 2017 099 461
- MONEISH KUMAR ET AL: "Zooming On All Actors: Automatic Focus+Context Split Screen Video Generation", COMPUTER GRAPHICS FORUM : JOURNAL OF THE EUROPEAN ASSOCIATION FOR COMPUTER GRAPHICS, WILEY-BLACKWELL, OXFORD, vol. 36, no. 2, 23 May 2017 (2017-05-23), pages 455 - 465, XP071545420, ISSN: 0167-7055, DOI: 10.1111/CGF.13140

## Description

### TECHNICAL FIELD

The present disclosure relates to a method and a system for automatically selecting a video output data, the video output data comprising a sequence of layouts, based on the looking direction of at least one actor in the scene.

### BACKGROUND

Applications such as corporate presentations, TV broadcast, high-end online education, etc. typically require the use of multiple cameras and a technical crew behind the scenes (e.g., camera operators, audio engineers, a director) to provide the viewer a dynamic and engaging experience. Having one or more operators behind the scenes to control the cameras and perform the switching from one camera to the other (live and / or in post-processing) is time consuming and therefore expensive.

To provide an enhanced experience to the viewer, it is required to vary the camera shots, vary the perspectives, show the main person speaking for a certain amount of time, not too long or the viewer will lose interest, not too short or the viewer may be annoyed, etc. Such production guidelines / aesthetics are typically well known to the skilled crew.

Attempts have been made to provide such an enhanced experience to the viewer automatically, i.e., without a crew behind the scenes.

Due to the improved accuracy of automatic person detection and tracking, many companies have developed camera-based solutions to improve visualization of people for recording and / or live streaming applications, for example, through intelligent cropping or active movement of a camera (e.g., in the case of pan-tilt-zoom cameras). Most common applications for such technologies include remote meetings, online education, corporate presentations, and broadcast applications.

The techniques used mostly involve person detection and tracking often combined with audio triggers such as the use of microphone arrays to detect the direction of the audio. Often these solutions involve a single camera, such as a PTZ camera provided with auto-tracking functionalities.

Some examples include:
- https://owllabs.eu/products/meeting-owl-pro
- https://na.panasonic.com/us/PTZ-autotracking
- https://presentation.aver.com/model/ptc310hn

Single-camera solutions provide only one perspective and require appropriate positioning of the camera. Also, although cropping can be applied, single camera solutions cannot actively (i.e, optically) zoom to multiple people at the same time (e.g., teacher and student asking a question). In addition, the camera may not be set up to visualize the relevant people appropriately.

To overcome these shortcomings, multi-camera systems have been introduced on the market. In some cases, an interface is provided for an operator to control the automatic tracking behavior of multiple cameras at the same time. Some examples include:
- https://www.seervision.com
- https://www.mrmoco.com/broadcast-solutions/polymotion-chat/

Typically, in such an environment, multiple cameras are used but at each point in time only one camera stream is "live" (i.e., visible as part of the production output, and, e.g., streamed to remote viewers). The operator simply selects the most appropriate stream based on the interactions in the scene such as talking activities, non-verbal body cues, etc.

Some companies offer solutions where not only the cameras are automatically operated, but also the selection of what is live at what point (i.e., the "switching"):
- https://proav.roland.com/global/products/v-8hd/
- https://www.1beyond.com/automate-vx/
- https://www.mobileviewpoint.com/vpilot

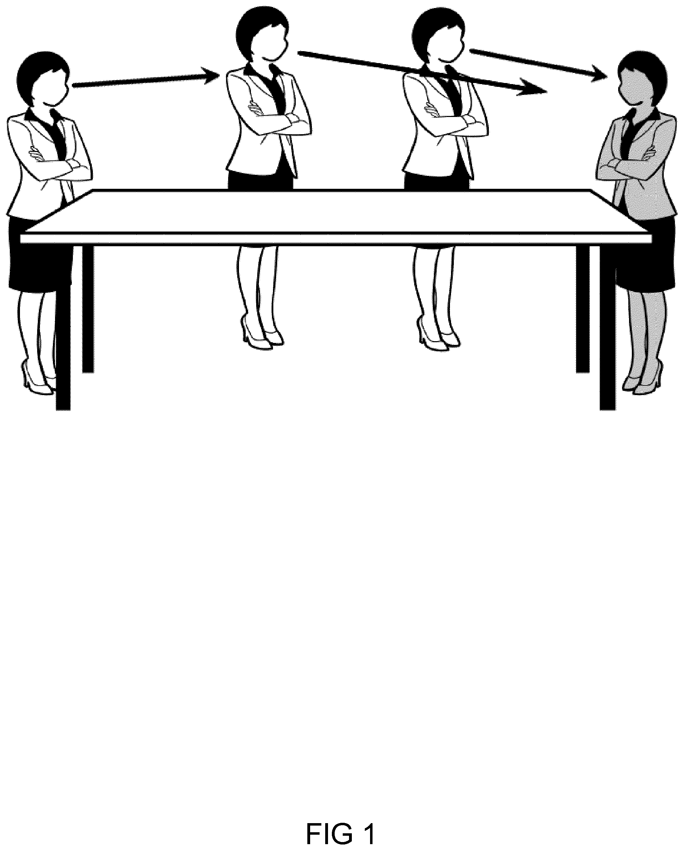

One limitation with such solutions is that - when automatic switching between cameras is based on audio activity only - the system only focuses on the person currently talking. As a result, the silent reactions of people who are listening may not be visible to the remote viewer. For example, in Figure 1, the person at the right is talking. This person may be important to visualize, but it is clear that he is looking at the person on the left. The person on the left may have subtle but crucial body language which may be missed by the remote viewer if only a close-up of the person on the right is shown in the live stream. Obviously, showing the overview shot during the entire session without any switching could solve this, but is not as dynamic and engaging, so a smarter solution is required.

A similar problem would present itself when a person is commenting on something that is visible on a screen (e.g., a replay of a highlight in a soccer game, or content on a whiteboard). Audio activity analysis alone will be insufficient in this case. While speech recognition and screen activity analysis may offer some solutions, they do not offer a complete understanding of what is considered important at that point by the people in the discussion.

Kumar, M., Gandhi, V., Ronfard, R. and Gleicher, M. (2017), Zooming On All Actors: Automatic Focus+Context Split Screen Video Generation. Computer Graphics Forum, 36: 455-465. https://doi.org/10.1111/cgf.13140 describes a method for automatically generating split screen videos from stage performance recordings, overcoming the issue of actors' faces appearing too small.

US 2006/0251382 A1 describes an automated video editor (AVE) which processes input videos to create an edited video stream with minimal user input, using cinematic rules, object recognition, and digital editing, to add effects like cross-cuts, zooms, and pans to footage from a single fixed camera.

US 2017/0099461 A1 describes an automated process for producing professional-quality videoconferencing video, in which rule based logic is integrated.

WO 2023/149836 A1 describes a method for producing a digital video stream, and in particular for producing a digital video stream based on two or more different digital input video streams, by detecting triggers defined as the detection of a transition pattern.

There is thus a need for improvement in the art.

### SUMMARY

It is an object of the present invention to provide a method overcoming the problems of the prior art, which is capable of automatically detecting where the center of attention is in a scene shown to a viewer, while still generating dynamics towards the viewer to keep his / her attention during the entire show/broadcast.

According to the invention, there is provided a method for automatically selecting video output data, the video output data comprising at least a sequence of layouts, wherein a layout is a combination or a composition of one or more visual sources in one video output, the visual source being at least provided by a camera shot of a scene, of a plurality of different camera shots of the scene provided by a plurality of cameras in different viewpoints, the scene comprising at least one actor and an object of interest,
the method comprising the steps of
   configuring a plurality of layouts,
determining a plurality of interaction states, and associating to each interaction state a sequence of layouts comprising at least one camera shot for each interaction state, wherein an interaction state is a situation in which the interaction between at least one actor and its environment remains unchanged and depends at least on the looking direction of the at least one actor,
capturing the scene with the plurality of cameras to generate video data of the scene,
processing the acquired video data of the scene to detect a current interaction state based on the looking direction of the at least one actor, and
selecting the video output data to show the sequence of layouts corresponding to the current interaction state.

Defining a sequence of layouts per interaction state (which essentially depends on the looking direction of at least one actor) has the advantage that the most relevant and appropriate content is always shown to the viewer. In addition, the content is shown actively as the sequence ensures that the layouts change over time. As soon as the interaction state transitions to another interaction state, this is detected by the system, and a new sequence of layouts is shown to the viewer. The method can be applied in various scenarios, such as for example remote meetings, online education, corporate presentations, and broadcast applications. A TV environment can for example be automatically reproduced. When a host introduces a guest, the method will be able to show a shot of the guest, then show a shot of the second guest, while switching automatically between the various camera shots.

Additional advantages are the following:
Automated video selection: The method enables the automatic selection of video output data, which can save time and effort compared to manually selecting camera shots and layouts for each interaction state.

Enhanced viewer experience: By selecting the most appropriate camera shots and layouts for each interaction state, the resulting video output can provide a more engaging and informative viewing experience for the audience.

Improved efficiency: The method can improve efficiency by automatically selecting camera shots and layouts, which can reduce the need for human intervention and decrease the time required for post-production editing.

Flexibility: The method is flexible and can be configured to adapt to different interaction states and visual sources, making it applicable to a wide range of video production scenarios.

Advantageously, the method further comprises the step of configuring a plurality of interaction state transitions between each interaction state, wherein each interaction state transition comprises a sequence of layouts comprising at least one camera shot, processing the acquired video data of the scene to detect an interaction state transition, selecting the video output data to show the sequence of layouts corresponding to the interaction state transition.

Even during an interaction state transition, it is possible to show the viewer another sequence of layouts. Even if an actor moves around the scene, it is for example possible to track the actor with a PTZ camera.

Preferably, the method further comprises the step of processing the acquired video data of the scene to detect a subsequent interaction state of the plurality of interaction states, selecting the video output data to show the sequence of layouts corresponding to the subsequent interaction state.

The sequence of layouts associated to an interaction state may comprise a layout of different camera shots and/or video streams and/or video sources.

The video data can also be provided with audio data, and the method may further comprise the step of performing speech detection of the audio data.

Speech detection can further improve for example the detection of the person talking.

According to the invention, a sequence of layouts comprises a set of rules which determines at least one of the duration, the order and the frequency of each camera shot of the sequence.

The set of rules provides means to further adapt to each situation or interaction state and can further improve the dynamics of the content shown to the viewer.

The set of rules can advantageously be defined according to at least one of a predetermined sequence of layouts, a statistical distribution such as a random weighted selection of layouts wherein the weights are preferably pre-determined, a gaussian or normal distribution, a trained neural network.

The weights of a weighted random distribution can for example be defined by a user such that the weights are the following: camera shot 1: 30% wide shot, camera shot 2: 35% close-up of the host, camera shot 3: 35% close-up of the guest. If the current layout comprises a shot with camera shot 2, and a switch is needed, there can be 30/65 probability for camera shot 1, and 35/65 probability for the camera shot 3. The "rand ()" function can be used to decide the next shot, using the probabilities. The weights associated to each layout of a sequence may also follow a gaussian or normal distribution, or can be determined by a trained neural network.

Preferably, the set of rules is a weighted selection based on hierarchical rules between actors and/or wherein the weight depends on the activity of each actor.

If for example in a political debate of two guests hosted by a broadcast TV host, it is desirable to show 40% of the time each guest and only 20% of the time the broadcast TV host, the present method allows very easily such an implementation which will guarantee that the times for each guest are respected.

Advantageously, the first camera shot of the subsequent sequence of layouts depends on the last shown camera shot.

This enables to create a smooth transition between two successive sequences of layouts.

Preferably, each layout is shown for at least a minimum time before showing a subsequent layout, the minimum time being set in a configuration file, the minimum time being preferably between 0.5 and 5 seconds, or more preferably 1 and 4 seconds, even more preferably 3 seconds.

The minimum shot time is very important for interaction state transitions as if it is too short, the transition from an interaction state to a subsequent interaction state may be too sudden and unexpected for the viewer. The minimum time may also be different for each sequence of layouts, or even for each layout. For example, it can be longer for a close-up view of a host, and shorter for an object of interest, etc.

It is preferred that each layout is shown for at most a maximum time, the maximum time being set in a configuration file.

The maximum time can be specific for a certain sequence of layouts or for certain layouts.

Each layout can be shown on average for a default time, preferably wherein the default time follows a statistical distribution, and wherein the default time and its statistical properties are set in a configuration file, the default time being preferably in a range of 15 to 25 seconds, preferably 20 seconds. The statistical distribution used to determine the default time period applies to the duration of each layout shown in the video output.

The step of processing the acquired video data of the scene to detect a current interaction state may advantageously comprise the step of evaluating the looking direction of at least one actor.

Preferably, the step of evaluating the looking direction of at least one actor is performed by
- detecting at least one actor and the object of interest,
- performing 3D pose estimation to extract 3D body keypoints of the at least one actor and keypoints of the object of interest,
- estimating the looking direction of the at least one actor,
- converting the looking direction of each actor to an angle in the reference coordinate system.

Advantageously, the step of processing the acquired video data of the scene to detect an interaction state transition comprises the step of detecting a change in the looking direction of at least one actor.

Preferably, the change in the looking direction is detected by following the evolution of facial landmarks in each of the at least one actor.

Advantageously, the step of processing the acquired video data of the scene to detect an interaction state transition comprises the step of performing speech detection, and/or the step of monitoring the evolution of the body language of an actor.

The step of estimating the looking direction can be performed by at least one of facial landmark estimation to extract facial landmarks for at least one actor, head pose estimation, eye gaze analysis.

The object of interest can be at least one of another actor, an object, a screen, a camera.

The method may further comprise the step of calibrating the plurality of cameras to map the images viewed by each camera in each camera shot to a reference coordinate system.

It is preferred that the plurality of cameras are arranged in different viewpoints such that at least one configuration of the plurality of cameras provides a plurality of camera shots having overlapping views to enable 3D reconstruction of the scene.

The method may further comprise the step of sending a command to a video mixer to show the video output data or the video mixer can be integrated in the system.

In another aspect, there is also provided a system for selecting video output data comprising
- a plurality of cameras for capturing a scene, of which at least one camera is further configured to capture images of the scene to generate output video data,
- a computer program product comprising software which when executed on one or more processing engines, performs any of the methods defined above to select the output video data,
- a video mixer configured to receive the video streams from the plurality of cameras and to select the output video data based on the output of the computer program product.

Preferably, the system further comprises a configuration file comprising at least one of a list of interaction states, for each interaction state a set of rules determining sequences of layouts, a distribution of camera shots switching time preferences (minimum and maximum), a set of rules describing interaction state transition conditions.

It is preferred that at least one camera is a PTZ camera.

The system may further comprise means to perform speech detection, and/or speech recognition.

In another aspect, there is provided a computer program product comprising software which executed on one or more processing engines, performs any of the methods defined above.

In another aspect, there is provided a non-transitory signal storage medium storing the computer program product defined above.

There is also provided a controller for a system defined above comprising the non-transitory signal storage medium defined above.

### BRIEF DESCRIPTION OF DRAWINGS

These and other features, aspects, and advantages of the apparatus, systems and methods of the present disclosure will become better understood from the following description, appended claims, and accompanying drawing wherein:
Figure 1 is a schematic view of a scene comprising four actors of which one is talking and looked at by all other three actors.
Figure 2A is a schematic view of a set up of a scene comprising two actors and four cameras.
Figure 2B is a schematic view of four camera shots acquired with the four cameras of figure 2A.
Figure 2C is a state diagram associated to the scene of Figure 2A.
Figure 3 is a diagram of a scene comprising three actors, of which one is talking, to illustrate an example of the method.
Figure 4 is a schematic view of a system for selecting output video data.
Figure 5 is a block diagram illustrating the method for selecting output video data with the system of Figure 4.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The terms "about" or "approximate" and the like are synonymous and are used to indicate that the value modified by the term has an understood range associated with it, where the range can be +20%, +15%, +10%, +5%, or +1%. The term "substantially" is used to indicate that a result (e.g., measurement value) is close to a targeted value, where close can mean, for example, the result is within 80% of the value, within 90% of the value, within 95% of the value, or within 99% of the value.

### DEFINITIONS

### Camera shot

A camera shot is the video / image from one camera, set up to capture a part of the scene (e.g., overview or focused on framing a certain person in a certain way). A camera shot defines how much space of a scene a viewer sees in a particular frame. A camera shot can be altered by changing camera parameters, by moving a camera to provide a different perspective, for example with a PTZ camera, but also by cropping the image of a camera. In cinematography, camera shots are important as a definition of the coverage of all camera shots will provide a coherent scene to the viewer.

Each camera shot is preferably configured before the shooting. The system can be configured considering the positions of each actor, such as the host's position, each guest's position, etc.

An ideal camera shot can be pre-defined, according to the requirements of a user configuration / controlling the system. A configuration interface may allow the user to change the parameters (such as spacing) of the ideal shot (beforehand) and the system then applies these recommendations. Even if the ideal camera shot has been predefined, it is possible not to use this configuration for each actor present in the scene. A selection may be done during the configuration phase. For example, it may be desirable to show only close-ups camera shots of the guest, and not the host, etc.

### Layout

A layout is a combination or a composition of one or more visual sources (e.g., camera shots, cameras, digital content, slides, background, overlays) in one video output. The viewer may see different aspects of a scene in one layout. A layout may thus also comprise a single camera shot.

It can include a single camera shot or multiple camera shots, along with other visual elements such as digital content, slides, backgrounds, overlays, and so on. The purpose of a layout is to present different aspects of a scene or a message to the viewer in an engaging and informative manner. By combining various visual sources, a layout can create a more dynamic and immersive viewing experience for the audience when appropriate.

**Coverage** defines the set of camera shots used to capture a scene.

**Looking direction** refers to the direction a person is looking at. It is typically measured as an angle with respect to a reference. To estimate the looking direction, it is possible to use different techniques, as outlined in the present application. In addition, the looking direction can be derived from the gaze, or the orientation of the head. The examples provided in the present disclosure are not limiting.

**Object of interest** refers to an object (or person) that is important in the scene at a certain point in time. The object of interest and/or the main actor may vary during the scene. The object of interest can be another actor (e.g., being looked at), can be a screen showing a presentation or a replay of another scene, an object of discussion (e.g., a new gadget) or it can also be the camera itself, if the main actor is speaking towards the camera, to a remote audience.

### State or interaction state

The terms state and interaction state may be used interchangeably throughout the description.

A state defines a situation in which the interaction between the at least one actor and its environment, such as an object of interest or another actor, remains unchanged. As soon as an actor or object of interest interacts differently with the environment, a state transition occurs, to arrive in a new state. In the present invention, the change triggering a state transition is at least based on a change in the looking direction. Additional changes can be based on a change in the person talking.

### State transition or interaction state transition

A transition is triggered by a change in the scene (e.g., change in looking direction), and a transition may indeed have a sequence of layouts associated to it, for example a certain visualization associated with it. For example, when entering state A, a camera may zoom in gradually. Or, when entering state B, the name of the guest can be overlayed on the image displayed, etc.

### Sequence

A sequence of layouts according to the present invention comprises at least one layout, preferably at least two layouts. The sequence is further defined by a set of rules which determines at least the order, the duration, and the frequency of each layout in the sequence. The set of rules can be based on different types of criteria, as explained throughout the text. A layout of the sequence should comprise at least one camera shot.

**Event** triggers a state transition; thus, an event is a change in looking direction but can also be a change in speech, a change in body language of an actor.

**PTZ camera** Pan Tilt Zoom camera, i.e., a camera capable of physical rotation left-right (i.e., pan) and up-down (tilt); as well as zooming optically by changing the camera lens properties (e.g., focal length).

**Camera crop** refers to a portion of an image which is shown while the remainder is left out.

**Video mixer** takes as input multiple video sources and maps them to an output. The output can correspond 1-to-1 to a certain input but could also combine multiple inputs in one view to generate a layout. Input video sources can be cameras but also presentation slides, other computer-generated graphics, or pictures (e.g., background images or logos). Example video mixers include vMix, Barco E2, Blackmagic ATEM mini etc.

The present invention provides a method for automatically mixing video data, the video data comprising at least a sequence of layouts. The plurality of camera shots are provided by a plurality of cameras in different viewpoints. The system needs to be able to estimate the locations and orientations of the cameras in the scene. Usually this is achieved by a calibration step. The cameras may have overlapping views to enable 3D reconstruction of a scene, the scene comprising at least one actor and an object of interest.

The cameras may also be arranged such that they have different viewpoints and at least one configuration of the plurality of cameras provides a plurality of camera shots having overlapping views to enable 3D reconstruction of the scene.

For example, an obvious but simplified solution could be for detecting the looking direction of an actor without overlapping views may be the following:
1. Calibrate the cameras in a setup phase with overlapping views,
2. Detect the location of a person in the scene, and perform 3D person reconstruction,
3. Zoom in to that person with a camera (consequently possibly resulting in non-overlapping camera views), and assuming the person has not moved significantly (e.g., because the person is seated), calculating the looking direction with respect to the camera, and hence the looking direction for the expected / previously known 3D position of the person,
4. If the person moves significantly, zoom out the camera so that views again overlap, and 3D analysis can be performed again.

An alternative simplified solution is as follows. If the scene has limited objects of interest, e.g., a news reporter trained to either look straight into the camera or towards the guest (left), analyzing the looking direction of a person relative to the camera (and not in 3D space) can be sufficient. "If person looks left (as observed in camera 1)" -> system behavior X, "if person looks into camera 1" -> system behavior Y.

The sequence of layouts is based on the looking direction of at least one actor in a scene. The method is also adapted to send a command to show a consecutive sequence of layouts based on an event which occurs in the scene, such that the previous sequence of layouts is not adapted anymore. The event can be triggered by a change in the looking direction of at least one actor, and/or by a change of actor speaking, or even a change in body language.

The method of the present invention allows to provide a layout to the viewer which is always adapted to a state and state transition such that the viewer always sees the most relevant content with dynamical changes thereby always keeping his attention.

The method comprises the following steps:
- defining a plurality of layouts,
- configuring a plurality of states by determining a sequence of layouts comprising at least one camera shot for each state, wherein a state depends at least on the looking direction of at least one actor,
- capturing the scene with the plurality of cameras to generate video data of the scene,
- processing the acquired video data of the scene to detect the current state,
- selecting the video data to show the sequence of layouts corresponding to the current state.

As at least one state depends on the looking direction of at least one actor present in the scene, it is important to provide means to detect the looking direction of each actor present in a scene. Therefore, 3D reconstruction of the scene can be used to identify the at least one actor in the scene and deduce therefrom his looking direction.

Thus, the step of processing the acquired video data of the scene to detect the current state can be performed by an image processing algorithm which is configured to retrieve the looking direction of at least one actor present in the scene.

To detect the looking direction, the following steps for an image processing algorithm can be for example implemented:
a) calibrating the plurality of cameras to map the images viewed by each camera to a reference coordinate system,
b) capturing the scene with the plurality of cameras to generate video data,
c) detecting at least one actor and the object of interest in the acquired video data,
d) performing 3D pose estimation to extract 3D body keypoints of at least one actor and keypoints of the object of interest,
e) estimating the looking direction of the at least one actor,
f) converting the looking direction of the at least one actor to an angle in the reference coordinate system,
g) selecting an actor of the at least one actor, wherein the selected actor is looking at another actor and/or object of interest,
h) based on at least one of the selected actors, the object of interest and the looking direction, deducing the state among the plurality of states.

The first step of the method can thus be to calibrate the plurality of cameras to map the images viewed by each camera to a reference coordinate system. The output is to provide a camera calibration matrix.

Camera calibration may involve estimating the parameters of a (typically pinhole) camera model approximating that camera, by observing an image or video stream from the camera. This is well-known in the literature, see for example https://en.wikipedia.org/wiki/Camera resectioning.

The goal is to estimate the projection matrix modeling the mapping between world coordinates and pixel coordinates. This matrix can be decomposed into an intrinsic and extrinsic matrix, in which the intrinsic matrix models the internal camera properties (i.e., lens characteristics), while the extrinsic matrix models the relation between the local camera coordinate system (CCS) and the global / world coordinate system (WCS).

Camera calibration is particularly interesting in the case of multi-camera setups where multiple cameras share overlapping views, since this enables reasoning about the relation and correspondence between images or video streams from different cameras. It also allows estimating an object or a scene in 3D. The following article https://saic-violet.github.io/learnable-triangulation discusses how to perform 3D pose estimation in a calibrated multi-camera setup.

Alternative sensors can also be used to estimate the 3D scene (e.g., time-of-flight cameras). However, these solutions typically have a restricted range at which they can operate, and/or are expensive or impractical to use in certain commercial use cases (e.g., meeting rooms, classrooms, or broadcast applications).

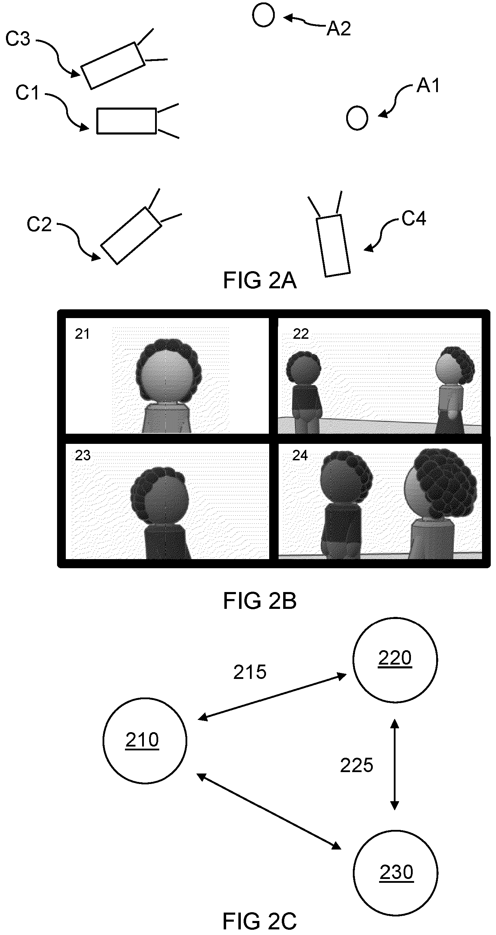

With regards to calibration and the use of PTZ cameras, the system is preferably calibrated for zoomed out positions of the cameras. For example, in the example of Figure 2B, this would correspond to cameras C2 and C4. Cameras C1 and C3 can also be calibrated in a zoomed out position, and when a person enters the scene, the system calculates how to operate the PTZ cameras so that the close-up shots (as shown in the example) are realized. This calculation consists of (1) projecting the 3D pose estimation results from the 3D scene view to the 2D image plane of cameras C1 and C3, and (2) calculating the PTZ parameters to move that camera to that position. The exact calculation of these PTZ parameters is known to the skilled person, as for example described in publication by Baris, Ipek & Bastanlar, Yalin. (2017). Classification and tracking of traffic scene objects with hybrid camera systems. 1-6. 10.1109/ITSC.2017.8317588.

There are different ways to calibrate a camera, as known to the skilled person. Calibration techniques often use a pattern, such as a checkerboard pattern or QR code, a pattern on a 2D plane, any pattern which allows to calculate a relation between width and height. The center of the pattern can be the center of the global coordinate system used in the 3D reconstruction. The output of the calibration is a camera calibration matrix which provides a mapping between the 3D world coordinate system and the camera pixel coordinates.

The calibration done by the present system can thus be performed to figure out where the cameras are in the space and their orientation. The system will use calibration to create the 3D scene model for analysis, and based on this model and the detected persons, the system will calculate the PTZ parameters required to move the camera in a way that frames an actor, for example the host, with the preferred shot type (e.g., close-up).

The next steps of the method may comprise the following:
- detecting each actor of the at least one actor and the object of interest,
- performing 3D pose estimation to extract 3D body keypoints of at least one actor and keypoints of the object of interest,

Various techniques exist to detect people in an image or video. Among current approaches, machine learning has shown to be very effective in detecting (and tracking) people, some examples include OpenPose , Deepcut, RMPE (Alphapose), and Mask RCNN . These networks have typically been trained on a large data set of pictures and / or videos with annotations in most cases provided by human annotators. One well-known data set is the COCO data set, where body keypoints such as the wrist, shoulder, elbow, knee... have been annotated.

On a high level, after being trained, networks for pose estimation are able to take an image / video frame as input and output a series of coordinates corresponding to the estimated body keypoints of a person. The coordinates of the body keypoints are typically expressed as 2D coordinates relative to the video frame (i.e., considering the left-top pixel as the origin of a two-dimensional grid of pixels for example).

Using triangulation techniques, it is possible to map the extracted 2D coordinates to the global coordinate system in 3D.

The next steps of the method comprises the following actions, estimating the looking direction of each detected actor, and converting the looking direction of each actor to an angle in the reference coordinate system.

Once body keypoints have been detected, there exists several techniques to extract the looking direction of a person.

In addition to pose estimation, there is an extensive literature on estimating keypoints in the face region, a process typically called "facial landmark estimation". Some references include OpenPose or OpenFace, but many other neural networks with similar behavior exist (one overview can be found on the following website: https://www.mdpi.com/2504-2289/3/1/14).

Similarly, these networks typically take as input one image or video frame and output a set of 2D or 3D coordinates corresponding to the estimated location of facial keypoints. Some of these networks also output the estimated head orientation of a person, but also other techniques can be used such as estimating the 3D coordinates using observed 2D points based on a generic 3D head model (https://learnopencv.com/head-pose-estimation-using-opencv-and-dlib/ ).

Non-machine-learning techniques may also be used for estimating facial keypoints, but these have become less popular as they are typically less accurate.

Methods to detect the looking direction of a person using 3D reconstruction have been depicted above, however, the present invention is not limited thereto, and other techniques known to the skilled person may also be used.

The present invention can be implemented in the framework of the invention described in the following patent application WO2021089130A1.

The present invention is based on the use of the looking direction of at least one actor in the scene to show, at all times, to the viewer the most relevant layout of a scene in a dynamical way. The video data comprises at least a sequence of layouts, wherein the camera shots may be provided by a plurality of cameras in different viewpoints with overlapping views to enable 3D reconstruction of a scene. 3D reconstruction may be used to enable detection of the looking direction.

In general, at least two cameras are required to perform 3D reconstruction, for example using triangulation techniques as known by the skilled person. It is also possible to provide a camera which is not used for viewing purposes but only used to improve the 3D reconstruction of the scene.

The most appropriate video data to show to the viewer is thus selected at all times and sent to a video mixer, prior to streaming the video data, display it, etc.

The scene comprises at least one actor and an object of interest. Generally, the object of interest may be another actor or a presentation, an object, a replay of a video, etc.

The first step of the method can therefore be to define a plurality of layouts. As defined above, a layout is a composition of one or more visual sources, such as camera shots, or presentation, etc. At least one layout should comprise a camera shot. For example, the preferred position of an actor or a guest in a camera shot can be decided upfront. The system may also comprise built-in logic that defines how a shot containing an actor and an object of interest should look like (in terms of margins between a person's head, and the left border of the image etc.). The plurality of layouts/camera shots are preferably based on cinematographic rules for shooting a scene and they define the camera coverage which is desired.

The various camera shots available are determined by the positions of the cameras. In addition, it is possible to switch from one camera shot to another with a static camera (that cannot be controlled to pan, tilt, and / or zoom), by providing cropping parameters (e.g., a subset of pixels in the camera image corresponding to a close-up of a person). In addition, a PTZ camera may provide different camera shots by controlling the PTZ parameters to obtain the desired shot.

Once the plurality of camera shots has been configured, the plurality of states can be configured. To each state can be associated a sequence of layouts comprising at least one camera shot, wherein each state depends on the looking direction of at least one actor. In addition, each state may also depend on different types of interactions between the actors or the interactions between the actor and an object of interest, such as body language, a person speaking, etc. Thus, a change of state occurs as soon as an actor changes looking direction, and in addition upon a change in body language, or a different person speaking, etc. Only the looking direction of the host may be relevant to trigger a state transition. The looking direction of a guest may not be relevant.

A change in looking direction can be defined as a change in the object or person which is being looked at. In fact, if the looking direction changes only by a few degrees, for example 8 degrees to the left, and if the person looking is still looking or interacting with the same person or object, this may not qualify as a change in looking direction. The change in looking direction occurs when the interaction changes if the person is looking at another person or another object of interest.

The sequence of layouts associated with a state may additionally comprise a layout of different camera shots and/or video sources. In a situation where a host is commenting on the replay of a football match for example, it may be desirable to show to the viewer a layout comprising the host and the replay. The layout of different camera shots may also show for example a presenter and an object of interest, such as a presentation, side by side.

The scene can then be captured with the plurality of cameras to generate video data of the scene. When the system starts to capture images, it is foreseen that cameras may auto-adjust the position of the frame for example, such that a person being filmed is in a more favorable position for the camera shot.

If it is detected that an actor does not look straight into the camera there is also the option to move the camera in a way that it frames the actor considering its looking direction, without necessarily viewing the object of interest.

Processing the acquired video data enables to detect the current state, in particular by estimating the looking direction of the at least one actor in the scene. The system may then send a command to a video mixer to show the sequence of layouts corresponding to the current state, or the system may also directly generate the video output based on the current state, the video output comprising the sequence of layouts corresponding to the current state.

Associating a sequence of layouts with each state (instead of only one) prevents for example that a camera shot/layout remains for too long, thereby avoiding that a viewer loses interest. In fact, it is desirable to change camera shot/layout while in the same state. Thus, for each state, it is possible to configure a sequence of layouts provided with a set of rules. The set of rules determines at least one of the orders of the camera shots/layouts, the duration of each camera shot/layout, and the frequency of each camera shot/layout. Thus, the set of rules can be provided in the form of a statistical distribution, such as a uniform or weighted random distribution, a Gaussian or normal distribution, as a fixed sequence, etc. The set of rules may also reflect a hierarchy between the different actors present in the scene. For example, the main presenter of a TV show may have more weight than the invited guests, and thus camera shots showing the hosts may carry more weight than others.

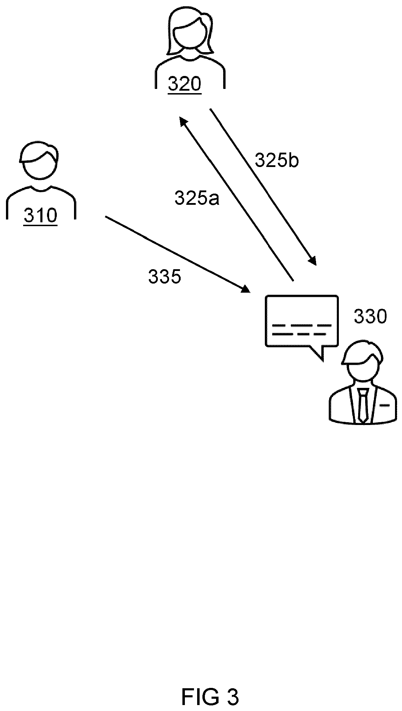

Figure 3 illustrates a simple and schematic example with three persons 310, 320, 330, wherein person 330 is talking and looking 325a at person 320, person 320 is looking 325b at person 330, and person 310 is looking 335 at person 330. Since person 330 is looking at person 320, one possible camera shot/layout sequence can be to alternate between a first camera shot of person 330, a second camera shot of person 320, and/or a third wide camera shot showing both person 330 and person 320.

One simple form of alteration can be to switch every 10 seconds, but also more refined schemes can be used such as considering the role or hierarchy of a person. For example, in a scenario where one of the actors is a host, and another actor is a guest, it is often more interesting to show the reactions of the guest rather than the host, so logic can be designed to favor shots of the guest. For example, if the host is person 330, person 330 can have a weight of 0.5 versus a weight of 1 for the guest, resulting in 5 seconds shot duration for person 330 close-ups, versus 10 seconds duration for person 320 close-ups or combined shots of person 320 and 330.

Another example to determine rules of a sequence of layouts can be based on the activities of each actor: If in a state of a scene two persons are looking at person 330, one person is looking at person 320, and nobody is looking at person 310, the system can use these ratios to decide the weight of each actor. For example, consider a four-camera system with three cameras set up to a close-up of each person, and one camera set up to a wide shot. Depending on the looking direction, shots including person 330 can have a minimal weight of two, shots including person 320 can have a minimal weight of one, whereas shots including person 310 can have a minimal weight of zero. This results in:
∘ Close-up of person 330 -> weight 2
∘ Close-up of person 320 -> weight 1
∘ Close-up of person 310 -> weight 0
∘ Wide shot of all people -> weight 2

When a new state occurs, one can proceed as follows to configure a new sequence of layouts:
1. Remove the previous camera shot from the sequence of layouts, in this example close-up of person 330, (strikethrough),
2. Normalized weight for each camera shot available in the sequence:
   ∘ Close-up of person 320 -> 1/ (1 + 0 + 2) = 0.33 weights
   ∘ Close-up of person 310 -> 0
   ∘ Wide shot of all people -> 2 / (1 + 0 + 2) = 0.66 weights
3. Use for example a weighted random selection to decide the next shot from that list of shots.

In Figure 3 different interactions between the actors are possible, i.e., the looking direction of each actor can change, and each actor may talk at a certain moment, etc. As soon as a state transition occurs, it is desirable to change the camera shot sequence and provide to the viewer a next camera shot sequence representative of the new focus of the scene.

The method thus further comprises the steps of
- configuring a plurality of state transitions between each state, wherein each state transition comprises a sequence of layouts comprising at least one camera shot,
- processing the video data of the scene to detect a state transition,
- sending a command to show the sequence of layouts according to the state transition.

The state transition can be detected as soon as an actor changes his looking direction. It can also be detected by analyzing the lips of the actors on the image of the acquired scene, and thereby identify who is talking. Any change in body language of the actors or person speaking can be used to trigger a state transition. Therefore, it is advantageous to perform audio analysis to detect a state transition, such as a change in the person talking.

Both speech detection (which detects if anyone is talking) or speech recognition can be used.

For example, detecting through audio analysis that person 330 is currently talking, can trigger the system to make a state transition. Techniques using speech detection can be used for example, as described in Ling Cen, Fei Wu, Zhu Liang Yu, Fengye Hu, Chapter 2 - A Real-Time Speech Emotion Recognition System and its Application in Online Learning, ISBN 9780128018569.

Analysis of non-verbal cues of the listening person can also be used to trigger a state transition. For example, the frame-by-frame difference between the facial landmarks of an actor can be calculated. When this difference exceeds a set threshold, this may be interpreted as a change in body language. In that case, the system can consider switching to a close-up shot of person 320 (if that is currently not shown).

The state transition can also be detected using a neural network that was trained using information about the number of people in the scene, their looking directions, and speech activity for example.

Finally, a state transition can also be triggered by an external trigger, such as a person pressing a button.

The sequence of layouts associated to the state transition may also comprise a dynamical shot, wherein for example an actor is tracked by a moving camera, or a shot of the person is zoomed in while he starts to talk, etc.

After the state transition, the scene is in a subsequent state. The method can then perform the following steps, processing the acquired video data of the scene to detect a subsequent state of the plurality of states, and sending a command to show the sequence of layouts corresponding to the subsequent state.

Figures 2A and 2B show four different camera shots of a scene to be captured with a four camera system. It is important to note that some cameras may be used only for 3D reconstruction of the scene, and not be used to capture the scene for (remote) viewing purposes, and vice-versa. The scene comprises a first actor on the right, actor 1 or A1, and a second actor on the left, actor 2 or A2. While capturing the scene, in a first state, the first actor may speak towards camera C1. In a second state, actor 1 may turns towards the second actor A2 to speak directly to him, while looking at him.

The following camera shots are available for capturing the scene with cameras C1, C2, C3 and C4. A first camera C1 provides a close-up view 21 of the first actor A1. A second camera C2 provides a wide view 22 showing both actors in the scene. A third camera C3 provides a close-up view 23 of the second actor A2. A fourth camera C4 shows another wide view 24 of the scene with both actors present in its field of view.

To provide the best experience to the viewer, the following sequence of layouts can be provided, depending on the state of the scene, i.e., the activity of the various actors and their interactions at each moment.

While actor 1 A1 is speaking towards camera 1, in this shot, a close-up shot 21 of actor 1 without showing the second person seems appropriate. In this case, the object of interest is the camera.

As soon as actor 1 turns to speak to actor 2 (or in other words actor 1 changes his looking direction), camera shot 22 seems appropriate as both actors are visible.

There are preferably two time thresholds defined in the system, a default shot time and a minimal shot time. The default shot time [for example 20 seconds] is the average time a shot is live while no other event occurs. Preferably, the default shot time obeys a statistical gaussian distribution with an average of X seconds and standard deviation of Y seconds. The average can be for example 20 seconds, and the standard deviation 5 seconds. It can also be defined such that the default shot time is on average 20 seconds, and 99% of the time between 15 and 25 seconds. The default shot time can be configured by the user using any definition or statistical distribution, but it can also be defined using machine learning (using a dedicated trained neural network).

The second parameter is a minimum shot time. It may not be desirable to wait the default shot time to switch camera shot sequence when a state transition occurs, for example when the actor 1 shown in camera shot 21 turns his head towards actor 2. In that case it is desirable to switch to the sequence of layouts associated to the subsequent state immediately unless this shot has only been live for a very short amount of time, such as 1 or 2 seconds. In this case, it can be best to wait a minimal shot time, Tmin of for example 3 seconds.

Figure 2C illustrates a state diagram which can be used when capturing the scene depicted in Figure 2A. The various states shown in the state diagram of Figure 2C are the following:
- State 210: actor 1 (host) looks straight into camera 1
- State 220: actor 1 (host) talks and looks at actor 2 (guest)
- State 230: actor 2 (guest) talks

To each state, a sequence of layouts 21, 22, 23, 24, can be associated.

In state 210, actor 1 looks straight into camera 1. Camera 1 is in this case the object of interest. Of course, it is not desirable to show the object of interest, i.e., the camera in this case.

It can be configured that while in state 210, the camera shot which is shown live is camera shot 21, thus a close-up of actor 1 looking into camera 1. In that state, there is can be no switch to another camera shot, thus the sequence may comprise a single camera shot. Only when the state changes, will the shown live camera shot be changed. The sequence associated to state 210 may be camera shot 21 for example.

Assuming actor 1 talks and looks at actor 2, a state transition 215 from state 210 to 220 occurs. Further assuming the previous camera shot was live for at least the minimal time, the following sequence of layouts associated to state 220 having the following rules could be configured:
- 20% of the time wide shot (camera shot 22)
- 40% of the time close-up of actor 2 (camera shot 23)
- 40% of the time close-up of actor 1 (camera shot 21)

These rules are thus based on probabilities, wherein each camera shot has a weight. The weight of each camera shot can be pre-configured or can be decided according to the activity and/or the hierarchy of each actor. For 10 minutes of broadcast time, these camera shots could also be combined in different ways such that they obey predefined ratios. E.g., 2 minutes camera shot 22, 4 minutes camera shot 23, etc.; or 10 seconds camera shot 22, 20 seconds camera shot 21, ... etc. The sequence of layouts can be predefined in a table, with a probability associated to each camera shot.

Providing a sequence of layouts to each state enables to automatically show dynamic and appropriate content of the scene to the viewer.

Each camera shot of the sequence can be shown for example during the default shot time, as defined above, or for example on average for 20 seconds and 99% of the time between 15 and 25 seconds. Infd other words, the duration and the frequency of each camera shot of the sequence can be defined by a set of rules, which rules may obey a statistical distribution, or any predefined distribution.

When the scene enters state 230, i.e., actor 2 (guest) starts to talk, and actor 1 may also look at actor 2. If the previous shot was live for at least the minimum time, the camera shot can be transitioned to a new camera shot sequence.

The following sequence with associated rules can be configured when entering state 230:
- 20% of the time wide shot (camera shot 22 or 24)
- 60% of the time close-up of actor 2 (camera shot 23)
- 20% of the time close-up of actor 1 (camera shot 21)

It can be beneficial to show actor 1 (host) to show to the viewer his reactions while actor 2 is speaking for example.

If a new state transition 225 occurs, triggered when the host or actor 1 starts talking again to the guest (state 220), it is important to first make sure the previous shot has been shown for at least the minimal time, and to switch to either a close-up of actor 1 (camera 1) or a wide shot (camera 2). Thus, for this state transition, the following rule can be configured:
If the previous camera shot 23 was a close-up of actor 2 (state 230) shown for at least the minimal time:
- 50% of the time switch to a wide shot (camera shot 22)
- 50% of the time switch to a close-up of actor 1 (camera shot 21).

In other words, a set of rules can be configured for each state and/or for each state transition. The set of rules can define a camera shot or a camera shot sequence. The camera shot sequence can be defined with a set of probabilities to determine at least one of the amount of time, the order and/or the frequency of each camera shot of the sequence. The rules can also be determined by a machine learning algorithm, which would enable to adapt automatically to different types of scenes, of course depending on the different neural networks which have been trained.

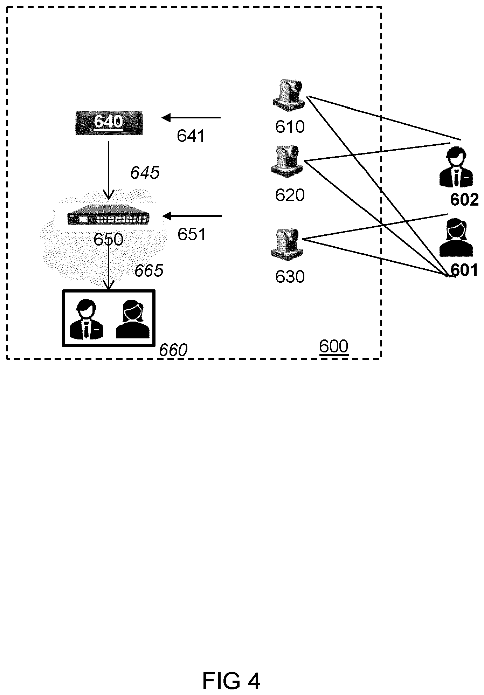

Figure 4 illustrates an example of a system according to the present invention. In this example, the system comprises three cameras 610, 620, 630. Cameras 610 and 620 are wide shot cameras and camera 630 is configured to show a close-up of the host 601. Both wide shot cameras are configured to show a different view of the host 601 and the guest 602.

The system 600 further comprises a computer program product 640 comprising software which when executed on one or more processing engines, performs any of the methods described above. The computer program product is configured to receive video streams 641 from cameras 610, 620 and 630 and to process the images of each camera stream to send commands 645 to a video mixer 650.

The video mixer 650 also receives video streams 651 from the plurality of cameras. The video mixer is configured to select, based on commands 645 received from the computer program product, between the different live video streams received 651, and in some cases, to compose a live video source comprising several video sources juxtaposed next to each other (a layout), or to create visual effects.

The video mixer sends an output video 665 to remote viewers and a remote screen 660 such as a TV, a laptop, etc.

The output video can be recorded or live streamed.

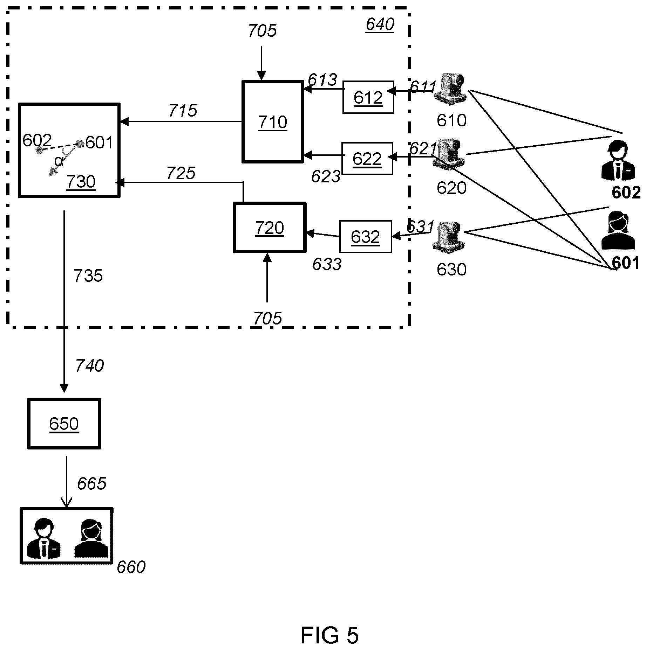

Figure 5 illustrates in a flow chart an example of the method when executed on the computer program product.

Camera 610 sends a video stream to block 612 which is configured to measure the 2D pose estimation and deduce therefrom the guest 602 and the host 601 body keypoints 613 relative to the image frame of camera 610.

Camera 620 sends a video stream 621 to block 622 which is configured to measure 2D pose estimation and deduce therefrom the guest 602 and the host 601 body keypoints 623 relative to the image frame of camera 620.

Block 710 is configured to provide a 3D pose estimation through triangulation from the received body keypoints 613 and 623 and from the camera calibration matrices 705. An example of generating a camera calibration matrix is explained above. It calculates the 3D pose estimation 715 of the host 601 and the guest 602 relative to the global coordinate system.

In parallel, camera 630 sends a video stream 631 to the analysis block 632 which calculates the host looking direction 633 with respect to the camera 630. This is then sent, together with the camera calibration matrices 705 to block 720 configured to map the looking direction to the global coordinate system and to output the 3D staring direction of the host relative to global coordinate system 725.

Block 730 receives the 3D pose of the host and the guest relative to the global coordinate system 715 and also receives the 3D staring direction of the host relative to global coordinate system 725. It is configured to perform a 3D analysis in the global coordinate system, as schematically illustrated in block 730. It derives the looking direction α from the host towards the guest. Based on a threshold on the angle, a decision is taken 735 to select the next state and camera shot sequence:
- if α < Threshold ⇒ switch to camera 1 or 2 unless T<Tmin
- if α ≥ Threshold ⇒ stay with camera 3 unless T>Tmax

The Threshold can be for example set at 10°. A command comprising the next sequence of layouts 740 is sent to the video mixer 650. The video mixer sends an output video 665 to remote viewers and a remote screen 660 such as a TV, a laptop, etc.

A command is sent to the video mixer each time a switch needs to be done.

The system is thus not only configured to provide an output video stream for live video streaming, but it also applies to cases where the output video is recorded.

It is also important to note that a microphone for all actors, for a plurality of actors or a microphone per actor may be provided for recording the scene. In addition, the audio may be used to perform speech detection/recognition during the recording. Speech activity detection can be used to switch from one camera shot to another (in one state). This can be a simple audio threshold (e.g., the loudest microphone = the person talking). Actual speech recognition could be used for switching based on what is being said.

To detect which actor is talking, the following method can be implemented for example:
3D zones can be used in the system as described in the following patent application by same applicant WO2021089130A1. A user can define a 3D zone per seat/person, and relate a given microphone to a zone during a configuration phase. Next, at runtime, the person in the zone with for example the loudest associated microphone volume is considered the person talking.

Alternative techniques may include using microphone arrays. Such devices can locate the sound, so if the relation between the audio-based location and the 3D reference coordinate system is known (e.g., through a configuration/calibration step), it can be assumed that the person detected closest to this location is the one talking.

Other techniques may use the analysis of lip movement of a person (assuming this is sufficiently visible in the camera) in addition to analyzing the audio. In that case there is no need for prior information / configuration about where the microphones are in the 3D environment.

Methods according to the present invention can be performed by a control unit such as a control unit or a processing device or any control unit for use with embodiments of the present invention including microcontrollers, either as a standalone device or embedded in a projector or as part of an optical subsystem for a projector. The present invention can use a processing engine being adapted to carry out functions. The processing engine preferably has processing capability such as provided by one or more microprocessors, FPGA's, or a central processing unit (CPU) and/or a Graphics Processing Unit (GPU), and which is adapted to carry out the respective functions by being programmed with software, i.e. one or more computer programs. References to software can encompass any type of programs in any language executable directly or indirectly by a processor, either via a compiled or interpretative language. The implementation of any of the methods of the present invention can be performed by logic circuits, electronic hardware, processors or circuitry which can encompass any kind of logic or analog circuitry, integrated to any degree, and not limited to general purpose processors, digital signal processors, ASICs, FPGAs, discrete components or transistor logic gates and similar.

Such a control unit or a processing device may have memory (such as non-transitory computer readable medium, RAM and/or ROM), an operating system, optionally a display such as a fixed format display, ports for data entry devices such as a keyboard, a pointer device such as a "mouse", serial or parallel ports to communicate other devices, network cards and connections to connect to any of the networks.

The software can be embodied in a computer program product adapted to carry out the functions of any of the methods of the present invention, e.g. as itemized below when the software is loaded onto the controller and executed on one or more processing engines such as microprocessors, ASIC's, FPGA's etc. Hence a processing device control unit for use with any of the embodiments of the present invention can incorporate a computer system capable of running one or more computer applications in the form of computer software.

The methods described with respect to embodiments of the present invention above can be performed by one or more computer application programs running on the computer system by being loaded into a memory and run on or in association with an operating system such as WindowsTM supplied by Microsoft Corp, USA, Linux, Android or similar. The computer system can include a main memory, preferably random-access memory (RAM), and may also include a non-transitory hard disk drive and/or a removable non-transitory memory, and/or a non-transitory solid state memory. Non-transitory removable memory can be an optical disk such as a compact disc (CD-ROM or DVD-ROM), a magnetic tape, which is read by and written to by a suitable reader. The removable non-transitory memory can be a computer readable medium having stored therein computer software and/or data. The non-volatile storage memory can be used to store persistent information that should not be lost if the computer system is powered down. The application programs may use and store information in the non-volatile memory.

While the invention has been described hereinabove with reference to specific embodiments, this was done to clarify and not to limit the invention. The skilled person will appreciate that various modifications and different combinations of disclosed features are possible without departing from the scope of the invention as defined by the appended claims.

## Claims

1. A method for automatically selecting video output data, the video output data comprising at least a sequence of layouts, wherein a layout is a combination or a composition of one or more visual sources in one video output, a visual source being at least provided by a camera shot of a scene, of a plurality of different camera shots of the scene provided by a plurality of cameras in different viewpoints, the scene comprising at least one actor and an object of interest, the method comprising the steps of
- configuring a plurality of layouts,
- determining a plurality of interaction states, and associating to each interaction state a sequence of layouts comprising at least one camera shot for each interaction state, wherein an interaction state is a situation in which the interaction between at least one actor and its environment remains unchanged and depends at least on the looking direction of the at least one actor,
- capturing the scene with the plurality of cameras to acquire video data of the scene,
- processing the acquired video data of the scene to detect a current interaction state based on the looking direction of the at least one actor, and
- selecting the video output data to show the sequence of layouts corresponding to the current interaction state,
wherein the sequence of layouts comprises a set of rules which determines at least one of the duration, the order and the frequency of each layout of the sequence.

2. Method according to claim 1, wherein the method further comprises the step of
- configuring a plurality of interaction state transitions between each interaction state, wherein each interaction state transition comprises a sequence of layouts comprising at least one camera shot,
- processing the acquired video data of the scene to detect an interaction state transition,
- selecting the video output data to show the sequence of layouts corresponding to the interaction state transition.

3. Method according to claim 1 or 2, wherein the method further comprises the step of
- processing the acquired video data of the scene to detect a subsequent interaction state of the plurality of interaction states,
- selecting the video output data to show the sequence of layouts corresponding to the subsequent interaction state.

4. Method according to any of the preceding claims, wherein the sequence of layouts associated to an interaction state comprises a layout of different camera shots and/or video streams, and/or video sources.

5. Method according to any of the preceding claims, wherein the video data is provided with audio data, and the method further comprises the step of performing speech detection of the audio data.

6. Method according to any preceding claim wherein the set of rules is defined according to at least one of a predetermined sequence of layouts, a statistical distribution such as a random weighted selection of layouts wherein the weights are preferably pre-determined, a gaussian or normal distribution, a trained neural network.

7. Method according to any preceding claim, wherein the set of rules is a weighted selection based on hierarchical rules between actors and/or wherein the weight depends on the activity of each actor.

8. Method according to any of the preceding claims, wherein the step of processing the acquired video data of the scene to detect a current interaction state comprises the step of evaluating the looking direction of the at least one actor,
preferably wherein the step of evaluating the looking direction of the at least one actor is performed by
- detecting the at least one actor and the object of interest,
- performing 3D pose estimation to extract 3D body keypoints of the at least one actor and keypoints of the object of interest,
- estimating the looking direction of the at least one actor,
- converting the looking direction of each actor to an angle in the reference coordinate system.

9. Method according to any of claim 2 or claims 3-8 when dependent on claim 2, wherein the step of processing the acquired video data of the scene to detect an interaction state transition comprises the step of detecting a change in the looking direction of the at least one actor, preferably wherein the change in the looking direction is detected by following the evolution of facial landmarks in each of the at least one actor.

10. Method according to any of claims 2 or 9 or claims 3-8 when dependent on claim 2, wherein the step of processing the acquired video data of the scene to detect an interaction state transition comprises the step of performing speech detection, and/or the step of monitoring the evolution of the body language of an actor.

11. A system for selecting video output data comprising
- a plurality of cameras (610, 620, 630) configured to enable 3D reconstruction of a scene, of which at least one camera is further configured to capture images of the scene to generate video output data,
- a computer program product (640) comprising software which when executed on one or more processing engines, performs any of the methods according to claims 1 to 10 to select the video output data,
- a video mixer (650) configured to receive video data from the plurality of cameras and to select the video output data based on the output of the computer program product.

12. A computer program product comprising software which when executed on one or more processing engines, performs any of the methods of claims 1 to 10.

13. A non-transitory signal storage medium storing the computer program product of claim 12.

14. A controller for a system according to claim 11 comprising the non-transitory signal storage medium of claim 13.

## Patentansprüche

1. Verfahren zum automatischen Auswählen von Videoausgabedaten, wobei die Videoausgabedaten mindestens eine Sequenz von Layouts umfassen, wobei ein Layout eine Kombination oder eine Zusammensetzung von Folgendem ist:
einer oder mehreren visuellen Quellen in einer Videoausgabe, wobei eine visuelle Quelle mindestens durch eine Kameraaufnahme einer Szene bereitgestellt ist, einer Vielzahl von unterschiedlichen Kameraaufnahmen der Szene, die von einer Vielzahl von Kameras aus unterschiedlichen Perspektiven bereitgestellt sind, wobei die Szene mindestens einen Akteur und ein Objekt von Interesse umfasst, das Verfahren umfassend die folgenden Schritte:
- Konfigurieren einer Vielzahl von Layouts,
- Bestimmen einer Vielzahl von Interaktionszuständen, und Zuordnen, zu jedem Interaktionszustand, einer Sequenz von Layouts, umfassend mindestens eine Kameraaufnahme für jeden Interaktionszustand, wobei ein Interaktionszustand eine Situation ist, in der die Interaktion zwischen mindestens einem Akteur und seiner Umgebung unverändert bleibt und mindestens von der Blickrichtung des mindestens einen Akteurs abhängt,
- Aufnehmen der Szene mit der Vielzahl von Kameras, um Videodaten der Szene zu erfassen,
- Verarbeiten der erfassten Videodaten der Szene, um einen aktuellen Interaktionszustand auf Basis der Blickrichtung des mindestens einen Akteurs zu erkennen, und
- Auswählen der Videoausgabedaten, um die Sequenz von Layouts zu zeigen, die dem aktuellen Interaktionszustand entspricht,
wobei die Sequenz von Layouts einen Satz von Regeln umfasst, der mindestens eines von der Dauer, der Reihenfolge und der Frequenz jedes Layouts der Sequenz bestimmt.

2. Verfahren nach Anspruch 1, wobei das Verfahren ferner die folgenden Schritte umfasst:
- Konfigurieren einer Vielzahl von Interaktionszustandsübergängen zwischen jedem Interaktionszustand, wobei jeder Interaktionszustandsübergang eine Sequenz von Layouts umfasst, umfassend mindestens eine Kameraaufnahme,
- Verarbeiten der erfassten Videodaten der Szene, um einen Interaktionszustandsübergang zu erkennen,
- Auswählen der Videoausgabedaten, um die Sequenz von Layouts zu zeigen, die dem Interaktionszustandsübergang entspricht.

3. Verfahren nach Anspruch 1 oder 2, wobei das Verfahren ferner die folgenden Schritte umfasst:
- Verarbeiten der erfassten Videodaten der Szene, um einen nachfolgenden Interaktionszustand der Vielzahl von Interaktionszuständen zu erkennen,
- Auswählen der Videoausgabedaten, um die Sequenz von Layouts zu zeigen, die dem nachfolgenden Interaktionszustand entspricht.

4. Verfahren nach einem der vorhergehenden Ansprüche, wobei die Sequenz von Layouts, die einem Interaktionszustand zugeordnet ist, ein Layout von unterschiedlichen Kameraaufnahmen und/oder Video-Streams und/oder Videoquellen umfasst.

5. Verfahren nach einem der vorhergehenden Ansprüche, wobei die Videodaten mit Audiodaten versehen sind und das Verfahren ferner den Schritt des Durchführens von Spracherkennung der Audiodaten umfasst.

6. Verfahren nach einem der vorhergehenden Ansprüche, wobei der Satz von Regeln definiert ist nach mindestens einem von einer vorbestimmten Sequenz von Layouts, einer statistischen Verteilung, wie einer willkürlich gewichteten Auswahl von Layouts, wobei die Gewichtungen vorzugsweise vorbestimmt sind, einer Gaußschen oder Normalverteilung, einem trainierten neuronalen Netzwerk.

7. Verfahren nach einem der vorhergehenden Ansprüche, wobei der Satz von Regeln eine gewichtete Auswahl auf Basis von hierarchischen Regeln zwischen Akteuren ist und/oder wobei die Gewichtung von der Aktivität des Akteurs abhängt.

8. Verfahren nach einem der vorhergehenden Ansprüche, wobei der Schritt des Verarbeitens der erfassten Videodaten der Szene, um einen aktuellen Interaktionszustand zu erkennen den Schritt des Bewertens der Blickrichtung des mindestens einen Akteurs umfasst,
wobei vorzugsweise der Schritt des Bewertens der Blickrichtung des mindestens einen Akteurs durchgeführt wird durch
- Erkennen des mindestens einen Akteurs und des Objekts von Interesse,
- Durchführen einer 3D-Lageschätzung, um 3D-Körperschlüsselpunkte des mindestens einen Akteurs und Schlüsselpunkte des Objekts von Interesse zu extrahieren,
- Schätzen der Blickrichtung des mindestens einen Akteurs,
- Konvertieren der Blickrichtung jedes Akteurs in einen Winkel in dem Referenzkoordinatensystem.

9. Verfahren nach einem der Ansprüche 2 oder der Ansprüche 3 bis 8 in Abhängigkeit von Anspruch 2, wobei der Schritt des Verarbeitens der erfassten Videodaten der Szene, um einen Interaktionszustandsübergang zu erkennen, den Schritt des Erkennens einer Änderung der Blickrichtung des mindestens einen Akteurs umfasst, wobei vorzugsweise die Änderung der Blickrichtung durch Folgen der Entwicklung von Gesichtslandmarken bei jedem von dem mindestens einen Akteur erkannt wird.

10. Verfahren nach einem der Ansprüche 2 oder 9 oder der Ansprüche 3 bis 8 in Abhängigkeit von Anspruch 2, wobei der Schritt des Verarbeitens der erfassten Videodaten der Szene, um einen Interaktionszustandsübergang zu erkennen, den Schritt des Durchführens von Spracherkennung und/oder den Schritt des Überwachens der Entwicklung der Körpersprache eines Akteurs umfasst.

11. System zum Auswählen von Videoausgabedaten, umfassend:
- eine Vielzahl von Kameras (610, 620, 630), die dazu konfiguriert sind, eine 3D-Rekonstruktion einer Szene zu ermöglichen, von denen mindestens eine Kamera ferner dazu konfiguriert ist, Bilder der Szene aufzunehmen, um Videoausgabedaten zu erzeugen,
- ein Computerprogrammprodukt (640), umfassend Software, die bei Ausführung auf einer oder mehreren Verarbeitungs-Engines eines der Verfahren nach den Ansprüchen 1 bis 10 durchführt, um die Videoausgabedaten auszuwählen,
- einen Videomischer (650), der dazu konfiguriert ist, Videodaten von der Vielzahl von Kameras zu empfangen und die Videoausgabedaten auf Basis der Ausgabe des Computerprogrammprodukts auszuwählen.

12. Computerprogrammprodukt, umfassend Software, die bei Ausführung auf einer oder mehreren Verarbeitungs-Engines eines der Verfahren der Ansprüche 1 bis 10 durchführt.

13. Nicht-transitorisches Signalspeichermedium, das das Computerprogrammprodukt von Anspruch 12 speichert.

14. Steuerung für ein System nach Anspruch 11, umfassend das nicht-transitorische Signalspeichermedium von Anspruch 13.

## Revendications

1. Procédé de sélection automatique de données de sortie vidéo, les données de sortie vidéo comprenant au moins une séquence de dispositions, dans lesquelles une disposition est une combinaison ou une composition d'une ou plusieurs sources visuelles dans une sortie vidéo, une source visuelle étant au moins fournie par une prise de caméra d'une scène, d'une pluralité de différentes prises de caméra de la scène fournie par une pluralité de caméras à différents points de vue, la scène comprenant au moins un acteur et un objet d'intérêt, le procédé comprenant les étapes consistant à
- configurer une pluralité de dispositions,
- déterminer une pluralité d'états d'interaction, et associer à chaque état d'interaction une séquence de dispositions comprenant au moins une prise de caméra pour chaque état d'interaction, dans laquelle un état d'interaction est une situation dans laquelle l'interaction entre au moins un acteur et son environnement demeure inchangée et dépend au moins de la direction de regard de l'au moins un acteur,
- capturer la scène avec la pluralité de caméras pour acquérir des données vidéo de la scène,
- traiter les données vidéo acquises de la scène pour détecter un état d'interaction actuel sur la base de la direction de regard de l'au moins un acteur, et
- sélectionner les données de sortie vidéo pour montrer la séquence de dispositions correspondant à l'état d'interaction actuel,
dans lequel la séquence de dispositions comprend un ensemble de règles qui détermine au moins l'un de la durée, de l'ordre et de la fréquence de chaque disposition de la séquence.

2. Procédé selon la revendication 1, dans lequel le procédé comprend en outre les étapes consistant à
- configurer une pluralité de transitions d'état d'interaction entre chaque état d'interaction, dans laquelle chaque transition d'état d'interaction comprend une séquence de dispositions comprenant au moins une prise de caméra,
- traiter les données vidéo acquises de la scène pour détecter une transition d'état d'interaction,
- sélectionner les données de sortie vidéo pour montrer la séquence de dispositions correspondant à la transition d'état d'interaction.

3. Procédé selon la revendication 1 ou 2, dans lequel le procédé comprend en outre les étapes consistant à
- traiter les données vidéo acquises de la scène pour détecter un état d'interaction postérieur de la pluralité d'états d'interaction,
- sélectionner les données de sortie vidéo pour montrer la séquence de dispositions correspondant à l'état d'interaction postérieur.

4. Procédé selon l'une quelconque des revendications précédentes, dans lequel la séquence de dispositions associée à un état d'interaction comprend une disposition de différentes prises de caméra et/ou flux vidéo, et/ou sources vidéo.

5. Procédé selon l'une quelconque des revendications précédentes, dans lequel les données vidéo sont fournies avec des données audio, et le procédé comprend en outre l'étape consistant à effectuer une détection de discours des données audio.

6. Procédé selon l'une quelconque des revendications précédentes, dans lequel l'ensemble de règles est défini selon au moins l'une d'une séquence de dispositions prédéterminée, une distribution statistique telle qu'une sélection pondérée aléatoire de dispositions dans laquelle les poids sont de préférence prédéterminés, une distribution gaussienne ou normale, un réseau neuronal entraîné.

7. Procédé selon l'une quelconque des revendications précédentes, dans lequel l'ensemble de règles est une sélection pondérée sur la base de règles hiérarchiques entre des acteurs et/ou dans lequel le poids dépend de l'activité de chaque acteur.

8. Procédé selon l'une quelconque des revendications précédentes, dans lequel l'étape consistant à traiter les données vidéo acquises de la scène pour détecter un état d'interaction actuel comprend l'étape consistant à évaluer la direction de regard de l'au moins un acteur,
dans lequel, de préférence, l'étape consistant à évaluer la direction de regard de l'au moins un acteur est effectuée en
- détectant l'au moins un acteur et l'objet d'intérêt,
- effectuant une estimation de pose 3D pour extraire des points clés de corps 3D de l'au moins un acteur et des points clés de l'objet d'intérêt,
- estimant la direction de regard de l'au moins un acteur,
- convertissant la direction de regard de chaque acteur en un angle dans le système de coordonnées de référence.

9. Procédé selon l'une quelconque de la revendication 2 ou des revendications 3 à 8 prises en dépendance de la revendication 2, dans lequel l'étape consistant à traiter les données vidéo acquises de la scène pour détecter une transition d'état d'interaction comprend l'étape consistant à détecter un changement dans la direction de regard de l'au moins un acteur, dans laquelle, de préférence, le changement dans la direction de regard est détecté en suivant l'évolution de points de repère faciaux de chacun de l'au moins un acteur.

10. Procédé selon l'une quelconque des revendications 2 ou 9 ou des revendications 3 à 8 prises en dépendance de la revendication 2, dans lequel l'étape consistant à traiter les données vidéo acquises de la scène pour détecter une transition d'état d'interaction comprend l'étape consistant à effectuer une détection de discours, et/ou l'étape consistant à surveiller l'évolution du langage corporel d'un acteur.

11. Système de sélection de données de sortie vidéo comprenant
- une pluralité de caméras (610, 620, 630) configurées pour permettre une reconstruction 3D d'une scène, desquelles au moins une caméra est en outre configurée pour capturer des images de la scène pour générer des données de sortie vidéo,
- un produit de programme informatique (640) comprenant un logiciel qui, lorsqu'il est exécuté sur un ou plusieurs moteurs de traitement, effectue l'un quelconque des procédés selon les revendications 1 à 10 pour sélectionner les données de sortie vidéo,
- un mélangeur vidéo (650) configuré pour recevoir des données vidéo provenant de la pluralité de caméras et pour sélectionner les données de sortie vidéo sur la base de la sortie du produit de programme informatique.

12. Produit de programme informatique comprenant un logiciel qui, lorsqu'il est exécuté sur un ou plusieurs moteurs de traitement, effectue l'un quelconque des procédés selon les revendications 1 à 10.

13. Support de stockage de signal non transitoire stockant le produit de programme informatique selon la revendication 12.

14. Contrôleur pour un système selon la revendication 11 comprenant le support de stockage de signal non transitoire selon la revendication 13.
